(19) Europäisches Patentamt
European Patent Office
Office européen des brevets

(11) **EP 4 470 747 A1**

(12) **EUROPEAN PATENT APPLICATION**

(43) Date of publication:
**04.12.2024 Bulletin 2024/49**

(21) Application number: **24178548.4**

(22) Date of filing: **28.05.2024**

(51) International Patent Classification (IPC):
**B29C 48/41** (2019.01)   **B29C 48/505** (2019.01)
**B29C 48/25** (2019.01)   **B29B 7/48** (2006.01)

(52) Cooperative Patent Classification (CPC):
**B29C 48/2517; B29B 7/481; B29C 48/41;
B29C 48/507**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.05.2023 IN 202341036936**

(71) Applicant: **Steer Engineering Private Limited
Bengaluru 560 058 (IN)**

(72) Inventor: **PADMANABHAN, Babu
560058 BANGALORE (IN)**

(74) Representative: **Noréns Patentbyrå AB
Box 10198
100 55 Stockholm (SE)**

(54) **AN ELEMENT AND A SCREW FOR A COUNTER-ROTATING TWIN-SCREW PROCESSOR**

(57)    An element for a counter-rotating twin screw processor is disclosed. The element has an axial bore for mounting on a screw shaft of the processor. The element or a portion of the element comprises a continuous self-wiping flight helically formed thereon. Further, the element comprises one or more lobes with a lobe profile that is defined in a radial plane of the element and is provided by a functionally continuous curve obtained by combining a first curve to a second curve. The second curve is a mirror-image of the first curve about a radial axis passing through a central axis of the element and one of two extreme points of the first curve. The first curve is represented by a mathematical expression defined by

$$x = \left[\frac{Di}{2} + \left(\frac{Do - Di}{2}\right)\left(\frac{\alpha - \sin\alpha}{2\pi}\right)\right]\cos\left(\frac{\alpha}{2N}\right)$$

$$y = \left[\frac{Di}{2} + \left(\frac{Do - Di}{2}\right)\left(\frac{\alpha - \sin\alpha}{2\pi}\right)\right]\sin\left(\frac{\alpha}{2N}\right),$$

wherein,
x, y are Cartesian co-ordinates defined in the radial plane,
Do is an outer diameter of the element or the lobe profile,
Di is an inner diameter of the element or the lobe profile,
N is a number of the one or more lobes, and
$\alpha$ is an angle of a radial section defined by the first curve in the radial plane.

*FIG. 3A*

**Description**

FIELD OF INVENTION

The present disclosure relates to the field of twin-screw processors. More particularly, the disclosure relates to an element for a counter-rotating twin-screw processor.

BACKGROUND OF THE INVENTION

Counter-rotating twin screw processors, such as twin-screw extruders, are known in art to comprise a long barrel with two parallel bores that intersect each other. Processing elements, such as screws, mounted on two parallel shafts respectively are placed in the bores. Each element has a flight formed thereon that extends along the length of the element and comprises of raised portions or lobes having larger radial diameter than the root diameter of the element. The number of lobes may be an integer or a non-integer forming integer lobe or non-integer lobe flights respectively.

In counter-rotating twin-screw processors, the processing elements are configured to rotate in the opposite directions with respect to each other and are generally, non-self-cleaning. The counter-rotating twin screw processors are used in production, compounding, and processing of materials such as plastics, food, paint and pharmaceuticals. A primary task carried out by the counter-rotating twin screw processors is mixing of the materials to produce a melt. There is a need to improve the material mixing capabilities of the counter-rotating twin-screw processors and elements for a counter rotating processor. There is also a need for elements for a counter rotating processor with reduced material stagnation and improved wiping capabilities.

SUMMARY OF THE INVENTION

In an aspect of the disclosure, an element for a counter-rotating twin screw processor having an axial bore for mounting on a screw shaft of the processor is disclosed. The element comprises at least one continuous self-wiping flight helically formed thereon. The element also comprises one or more lobes with a lobe profile that is defined in a radial plane of the element. The lobe profile of each lobe is provided by a functionally continuous curve obtained by combining a first curve to a second curve. The first curve is represented by a mathematical expression and the second curve is a mirror-image of the first curve about a radial axis passing through a central axis of the element and one of two extreme points of the first curve. The mathematical expression for the first curve being defined by

$$x = \left[\frac{Di}{2} + \left(\frac{Do - Di}{2}\right)\left(\frac{\alpha - \sin\alpha}{2\pi}\right)\right]\cos\left(\frac{\alpha}{2N}\right)$$

$$y = \left[\frac{Di}{2} + \left(\frac{Do - Di}{2}\right)\left(\frac{\alpha - \sin\alpha}{2\pi}\right)\right]\sin\left(\frac{\alpha}{2N}\right),$$

wherein,

x, y are Cartesian co-ordinates defined in the radial plane,
Do is an outer diameter of the element or the lobe profile,
Di is an inner diameter of the element or the lobe profile,
N is a number of the lobes, and
α is an angle of a radial section defined by the first curve in the radial plane.

In another aspect of the present disclosure, a counter-rotating screw for a counter-rotating twin screw processor is disclosed. The counter-rotating twin screw processor defines an axial bore for housing the counter-rotating screw. At least a portion of the counter-rotating screw comprises at least one continuous self-wiping flight helically formed thereon. The counter-rotating screw also comprises one or more lobes with a lobe profile that is defined in a radial plane of the counter-rotating screw. The lobe profile of each lobe is provided by a functionally continuous curve obtained by combining a first curve to a second curve. The first curve is represented by a mathematical expression and the second curve is a mirror-image of the first curve about a radial axis passing through a central axis of the element and one of two extreme points of the first curve. The mathematical expression for the first curve being defined by

**EP 4 470 747 A1**

$$x = \left[\frac{Di}{2} + \left(\frac{Do - Di}{2}\right)\left(\frac{\alpha - \sin\alpha}{2\pi}\right)\right] \cos\left(\frac{\alpha}{2N}\right)$$

$$y = \left[\frac{Di}{2} + \left(\frac{Do - Di}{2}\right)\left(\frac{\alpha - \sin\alpha}{2\pi}\right)\right] \sin\left(\frac{\alpha}{2N}\right),$$

wherein,

x, y are Cartesian co-ordinates defined in the radial plane,
Do is an outer diameter of the element or the lobe profile,
Di is an inner diameter of the element or the lobe profile,
N is a number of the lobes, and
$\alpha$ is an angle of a radial section defined by the first curve in the radial plane.

In yet another aspect of the present disclosure, a counter-rotating twin-screw processor is disclosed. The counter-rotating twin-screw processor comprises a barrel defining a first cylindrical bore and a second cylindrical bore. The first cylindrical bore and the second cylindrical bore intersect to form a chamber. A first shaft rotates within the first bore about an axis and a second shaft rotates within the second bore about an axis. At least one element is coupled to the first shaft and the second shaft respectively. The element comprises an axial bore for mounting on the first shaft and the second shaft respectively. The element also comprises a continuous self-wiping flight helically formed thereon. Further, the element comprises one or more lobes with a lobe profile that is defined in a radial plane of the counter-rotating screw. The lobe profile of each lobe is provided by a functionally continuous curve obtained by combining a first curve to a second curve. The first curve is represented by a mathematical expression and the second curve is a mirror-image of the first curve about a radial axis passing through a central axis of the element and one of two extreme points of the first curve. The mathematical expression for the first curve being defined by

$$x = \left[\frac{Di}{2} + \left(\frac{Do - Di}{2}\right)\left(\frac{\alpha - \sin\alpha}{2\pi}\right)\right] \cos\left(\frac{\alpha}{2N}\right)$$

$$y = \left[\frac{Di}{2} + \left(\frac{Do - Di}{2}\right)\left(\frac{\alpha - \sin\alpha}{2\pi}\right)\right] \sin\left(\frac{\alpha}{2N}\right),$$

wherein,

x, y are Cartesian co-ordinates defined in the radial plane,
Do is an outer diameter of the element or the lobe profile,
Di is an inner diameter of the element or the lobe profile,
N is a number of the lobes, and
$\alpha$ is an angle of a radial section defined by the first curve in the radial plane.

In yet another aspect of the present disclosure, a pair of elements for a twin-screw processor is disclosed. The twin-screw processor comprises a first shaft and a second shaft. The pair of elements comprise a first element adapted to be coupled to the first shaft and a second element adapted to be coupled to the second shaft. The first element and the second element each have a continuous self-wiping flight helically formed thereon. Further, the first element and the second element each have one or more lobes with a lobe profile that is defined in a radial plane of the first element and the second element respectively. The lobe profile is provided by a functionally continuous curve obtained by combining a first curve to a second curve. The first curve is represented by a mathematical expression and the second curve is a mirror-image of the first curve about a radial axis passing through a central axis of the first element or the second element and one of two extreme points of the first curve. The mathematical expression for the first curve being defined by

$$x = \left[\frac{Di}{2} + \left(\frac{Do - Di}{2}\right)\left(\frac{\alpha - \sin\alpha}{2\pi}\right)\right] \cos\left(\frac{\alpha}{2N}\right)$$

4

$$y = \left[\frac{Di}{2} + \left(\frac{Do - Di}{2}\right)\left(\frac{\alpha - \sin\alpha}{2\pi}\right)\right]\sin\left(\frac{\alpha}{2N}\right),$$

wherein,

x, y are Cartesian co-ordinates defined in the radial plane,
Do is an outer diameter of the first element, the second element, or the lobe profile,
Di is an inner diameter of the first element, the second element, or the lobe profile,
N is a number of the one or more lobes, and
$\alpha$ is an angle of a radial section defined by the first curve in the radial plane.

BRIEF DESCRIPTION OF DRAWINGS

FIG. 1 is an exemplary illustration of a counter-rotating twin screw processor in accordance with an embodiment of the present disclosure;
FIG. 2 is an exemplary illustration of side views of processing elements in the counter-rotating twin screw processor of FIG. 1, in accordance with the embodiment of the present disclosure;
FIGS. 3A-3B are exemplary front and side view illustrations of the processing element of FIG. 2, in accordance with the embodiment of the present disclosure;
FIGS. 4, 5, and 6A, 6B, 6C are exemplary side-view illustrations of relative rotational movements of the processing elements of FIG. 2 with respect to each other in the counter-rotating twin screw processor of FIG. 1, in accordance with the embodiment of the present disclosure; and
FIGS. 7-9 are exemplary side-view illustrations of single lobed, bi-lobed, and four-lobed processing elements in the counter-rotating twin screw processor of FIG. 1, in accordance with the embodiment of the present disclosure.

DETAILED DESCRIPTION

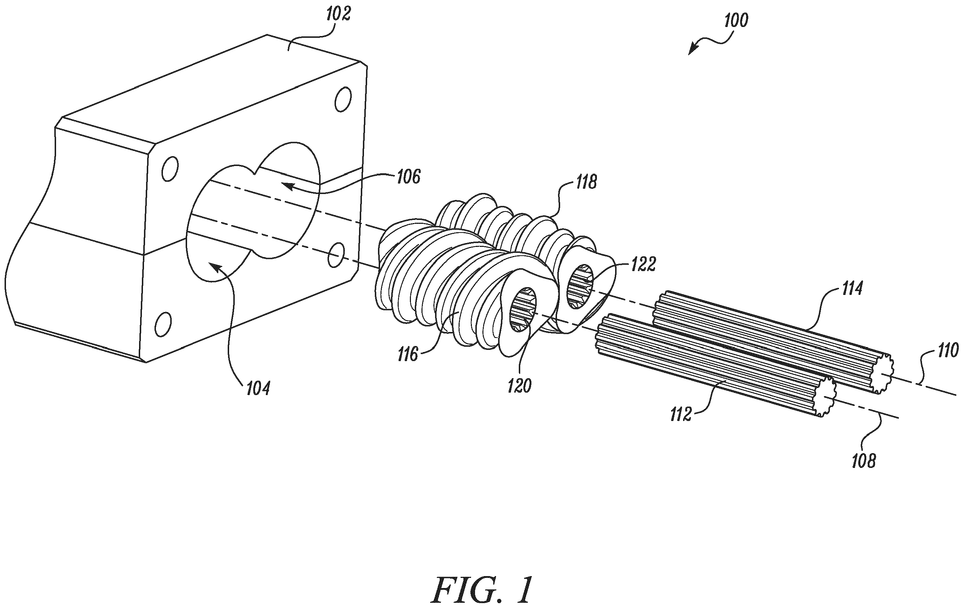

Referring to FIG. 1, an exemplary illustration of a counter-rotating twin screw processor 100, herein referred to as "processor 100" is disclosed. The processor 100 may comprise a housing 102 having two cylindrical housing bores 104, 106. The two cylindrical housing bores 104, 106 may have an axis 108 and 110 respectively disposed parallelly with respect to each other. A first screw shaft 112 and a second screw shaft 114 are disposed in the two cylindrical housing bores 104, 106 respectively. A pair of processing elements 116, 118 or 'elements' may be mounted on the screw shafts 112, 114 respectively. In an embodiment, a plurality of such element pairs mounted on respective screw shafts may define various zones within the processor 100 including an intake zone, a mixing zone and an output zone. The elements 116, 118 may comprise grooved axial bores 120, 122 in which splines of the screw shafts 112, 114 respectively are engaged. It may be apparent that the elements 116, 118 may also be configured for mounting on the screw shafts 112, 114 via different engagement means. In some embodiments, the element 116 and the first screw shaft 112 may not be separate components and may define a single component, herein referred to as a "counter-rotating screw". Similarly, the element 118 and the second screw shaft 114 may not be separate components and define another counter-rotating screw. The two counter-rotating screws may be housed in the two cylindrical housing bores 104, 106 respectively. In such embodiments, the two counter-rotating screws may exhibit an outer profile similar to outer profiles of the elements 116, 118 respectively.

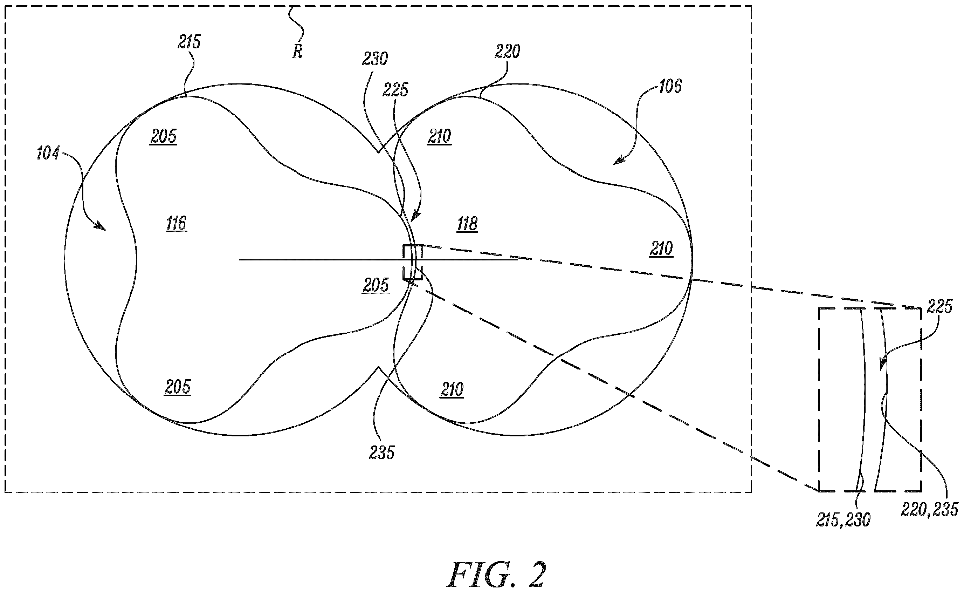

Referring to FIG. 2, an exemplary illustration of side views of the elements 116, 118 in the processor 100 of FIG. 1 respectively is disclosed. In an embodiment, the elements 116, 118 may each be tri-lobed defined by lobes 205 and 210 respectively. The lobes 205 and 210 define screw profiles 215 and 220 of the elements 116, 118 respectively. The screw profile 215 on the element 116 determines the screw profile 220 on the element 118 or vice versa. Accordingly, the screw profile 215 is referred to as a generating screw profile and the screw profile 220 is referred to as a generated screw profile. The elements 116, 118, in accordance with an embodiment of the present disclosure, are self-wiping such that, the element 116 effects a wiping of the element 118 and vice versa, when the elements 116, 118 are counter-rotated simultaneously in opposite directions A, B respectively. In an embodiment, the elements 116, 118 may be rotated in clockwise and anti-clockwise directions respectively or vice versa. A clearance 225 is provided between the elements 116, 118 and the curvatures of the screw profiles 215, 220 are also configured based on a predefined mathematical expression so as to allow the elements 116, 118 to be self-wiping. The clearance 225 provided may be predefined and extend between the elements 116, 118 along a longitudinal length of the elements 116, 118 respectively. In an embodiment, the clearance 225 may range from 150 $\mu$m to 250 $\mu$m. In an embodiment, the clearance 225 may be defined between a crest portion 230 of the screw profile 215 defined by the lobe 205 associated with the element 116 and a trough portion 235 of the screw profile 220 formed between the lobes 210 associated with the element 118. In an embodiment, the elements 116, 118 may together define a pair of elements with the clearance 225 provided therebetween such that for each cross-section of the element 116 on the first screw shaft 112 there exists a conjugate or a substantially conjugate cross-section of the element 118 on the corresponding second screw shaft 114 that is self-wiping. For purposes of clarity and understanding, the element 116 will be described hereafter in detail and it may be understood that the same would also be applicable to the element 118.

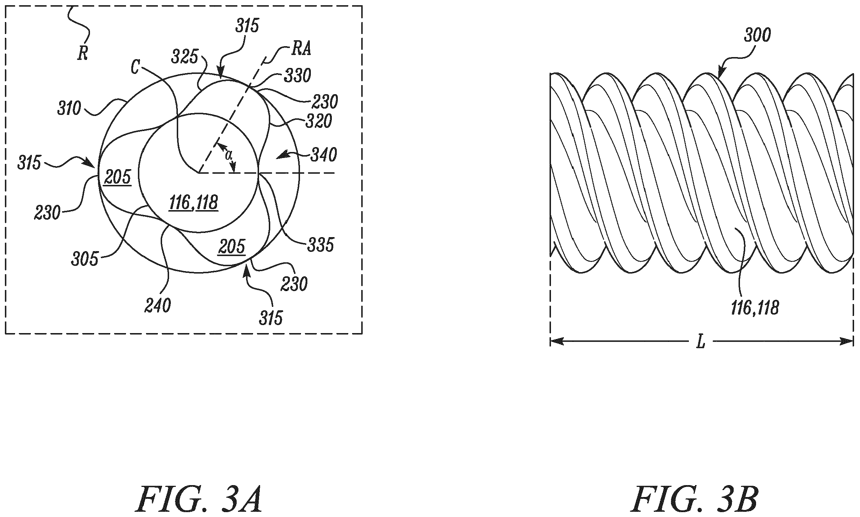

Referring to FIGS. 3A-3B, exemplary illustrations of side and front views of the element 116 of FIGS. 1-2 is disclosed. The lobes 205 of the element 116 define a lobe profile 315 respectively. It may be understood that for instances when the counter-rotating screw is used, in place of the element 116 mounted on the first screw shaft 112, the counter-rotating screw may comprise the lobes 205 defining the lobe profile 315. The element 116 defines an inner diameter 305 and an outer diameter 310. In an embodiment, the inner diameter 305 may be defined by trough portions 240 formed between the lobes 205 respectively and the outer diameter 310 may be defined by the crest portions 230 of the lobes 205 respectively. In an embodiment, the inner diameter 305 may correspond to the inner diameter of the lobe profile 315 and the outer diameter 310 may correspond to the outer diameter of the lobe profile 315. The lobe profile 315 is defined in a radial plane R of the element 116. The element 116 comprises at least one continuous self-wiping flight 300, helically formed thereon. The lobe profile 315 of the lobes 205 respectively when transformed axially in a helical manner defines the continuous self-wiping flight 300. The flight 300 formed is continuous without any breaks or interruptions. A number of flights formed in the element 116 corresponds to a number of lobes provided in the element 116. For example, in a tri-lobed element, such as the element 116, having three lobes may define three continuous self-wiping flights helically formed thereon. The flight 300 may transform one or more times along an longitudinal length L of the element 116. The flight transformation may involve a change in the lobes 205 along the longitudinal length L. The change in the lobes 205 may correspond to a change in a number of lobes and/or the lobe profiles associated with the lobes formed on the element 116. In some embodiments, the lobe profile 315 of the lobes 205 respectively may extend along the entire longitudinal length L of the element 116. In some embodiments, the lobe profile 315 of the lobes 205 respectively may extend along one or more portions along the longitudinal length L of the element 116. In such embodiments, the flight 300 may define the continuous self-wiping flight along the portion(s) comprising the lobe profile 315 of the lobes 205 and define a continuous non-self-wiping flight at remaining portion(s) along the longitudinal length L of the element 116. In some embodiments, a number of lobes and/or their respective lobe profiles in the remaining portion(s) along the longitudinal length L of the element 116 may be different from the number of the lobes 205 and/or their respective lobe profiles 315 in the portion(s) comprising the lobe profile 315. It may be understood that for instances when the counter-rotating screw is used, in place of the element 116 mounted on the first screw shaft 112, the lobe profile 315 of the lobes 205 respectively may extend along one or more portions along the longitudinal length L of the counter-rotating screw. The flight 300 may have an integer number of lobes, referred to as "integer lobes", that typically vary between one to four lobes, extending along the longitudinal length L of the element 116. Such elements are referred to as "integer lobe flight" or elements having a integer lobe flight. The flight 300 may also have a non-integer number of lobes, referred to as "non-integer lobes", such as a fractional lobe or irrational lobe, extending along the longitudinal length L of the element 116. Such elements are referred to as "non-integer lobe flight" or elements having a non-integer lobe flight. In addition, the flight 300 may also have different combinations of integer and/or non-integer lobes extending along the longitudinal length L of the element 116. In an embodiment, the flight 300 may start as an integer or non-integer number of lobes. In an embodiment, the flight 300 may transform from an integer lobe flight to a non-integer lobe flight or vice versa, or from an integer lobe flight to another integer lobe flight or from a non-integer lobe flight to another non-integer lobe flight.

A non-integer lobe element may be a fractional lobed element. Examples of a fractional lobe element formed from a single lobe element, a bi-lobe element, a tri-lobe element, and/or a four lobe element are described in U.S. Pat. No. 6,783,270, U.S. Pat. No. 10,207,423, and U.S. Pat. No. 10,239,233. A non-integer lobe element may be an irrational number lobed element. Irrational number lobed elements are described in U.S. Pat. No. 8,753,003. A fractional lobed element is an element intermediate a first integer element (n) and a second integer element (N) by a predefined fraction, such that N/n is an integer and the fraction determines the degree of transition between the first integer and the second integer. A single flight lobe and a bi-lobe can form fractional lobes such as 1.2.xx, where xx can be any number from 1 to 99. The numbers 1 to 99 define whether the fractional lobe will look more like a single flight element or a bi-lobed element. The numbers 1 and 2 in the notation 1.2.xx represent the lobe element intermediate a single flight element (1) and a bi-lobe element respectively (2). Thus, a fractional lobe element represented as 1.4.50 represents an element mid-way between a single flight and a four lobe element.

The lobe profile 315 of each lobe 205 is provided by a functionally continuous curve obtained by combining a first curve 320 to a second curve 325. The first curve 320 is represented by a predefined mathematical expression. The second curve 325 is a mirror-image of the first curve 320 about a radial axis RA passing through a central axis C of the element 116 and one of two extreme points (330, 335) of the first curve 320. The mathematical expression for the first curve 320 is defined by:

$$x = \left[ \frac{Di}{2} + \left( \frac{Do - Di}{2} \right) \left( \frac{\alpha - \sin \alpha}{2\pi} \right) \right] \cos \left( \frac{\alpha}{2N} \right)$$

$$y = \left[ \frac{Di}{2} + \left( \frac{Do - Di}{2} \right) \left( \frac{\alpha - \sin \alpha}{2\pi} \right) \right] \sin \left( \frac{\alpha}{2N} \right),$$

wherein,

x, y are Cartesian co-ordinates defined in the radial plane R,
Do is an outer diameter 310 of the element 116 or the lobe profile 315,
Di is an inner diameter 305 of the element 116 or the lobe profile 315,
N is a number of the lobes 205, and
$\alpha$ is an angle of a radial section 340 defined by the first curve 320 in the radial plane R.

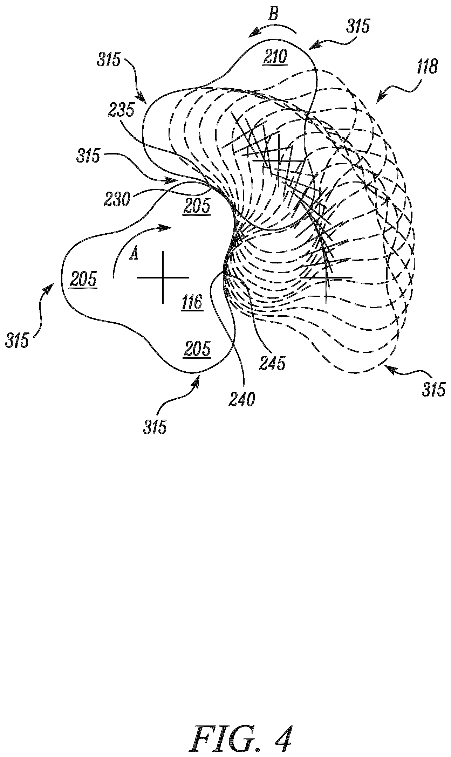

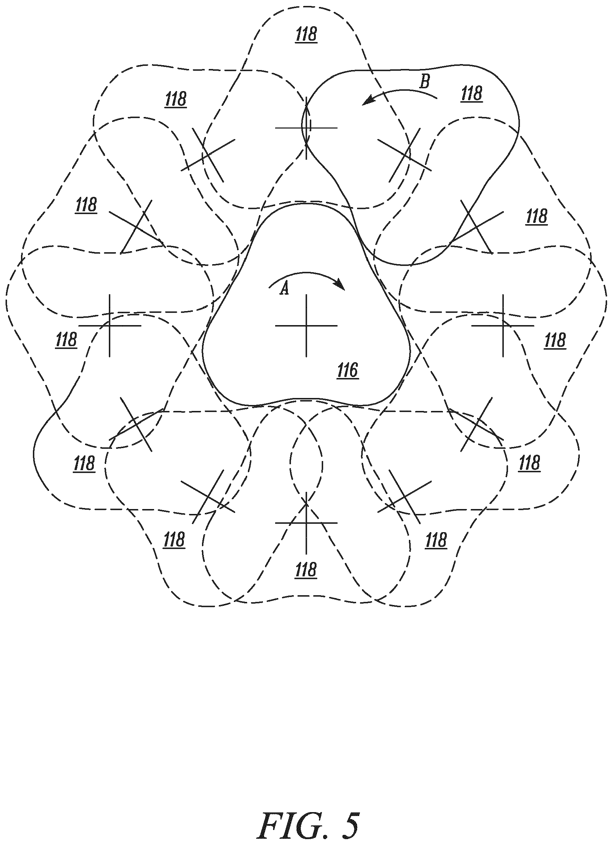

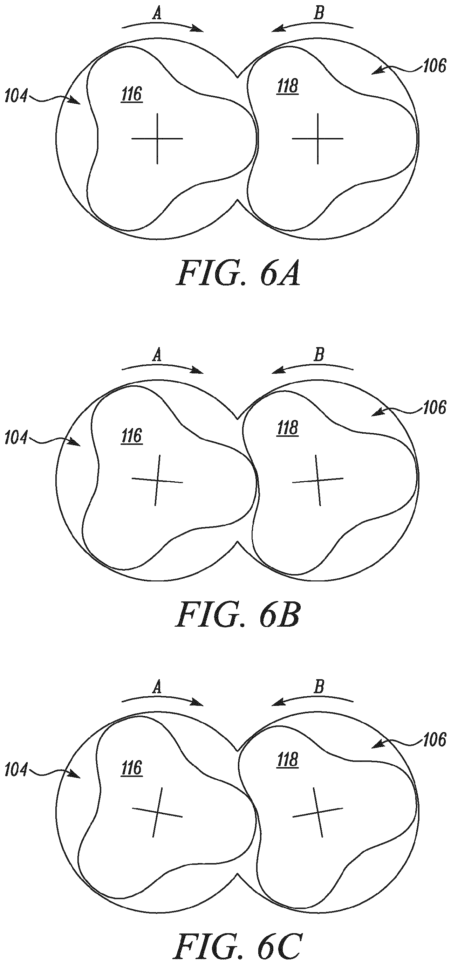

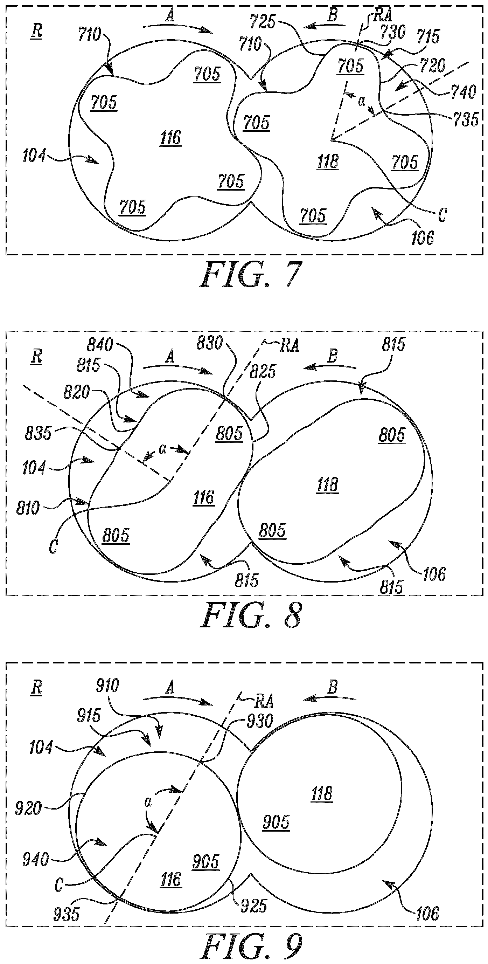

In an embodiment, the second curve 325 is a mirror-image of the first curve 320 about the radial axis RA passing through a central axis C of the element 116 and the extreme point 330 of the first curve 320 that lies on the outer diameter 310 (Do) of the element 116 or the lobe profile 315. In an embodiment, the angle $\alpha$ of the radial section 340 varies from 0 to $2\pi$ radians. In an embodiment, the radial section 340 corresponds to a circular sector derived from outer diameter 310 (Do) of the element 116 or the lobe profile 315. In an embodiment, the radial section 340 is defined by $\pi$ radian/N.
Referring to FIGS. 4-5 and 6A-6C, exemplary side-view illustrations of relative rotational movement of the element 118 with respect to the element 116 in the counter-rotating twin screw processor 100 of FIG. 1 is disclosed. The element 116 effects a complete wiping of the element 118, when the elements 116, 118 are counter-rotated simultaneously in the opposite directions A, B respectively. Particularly, the clearance 225 provided between the elements 116 and 118 facilitates the self-wiping action when the crest portion 230 of the lobe profile 315 defined by the lobe(s) 205 of the element 116 moves into and/or away from the trough portion 235 of the lobe profile 315 formed between the lobe(s) 210 of the element 118 during the simultaneous counter-rotation in the opposite directions A, B respectively. Similarly, the element 118 also effects a complete wiping of the element 116 when the elements 116, 118 are counter-rotated simultaneously in the opposite directions A, B respectively. Particularly, the clearance 225 provided between the elements 116 and 118 facilitates the self-wiping action as a crest portion 245 of the lobe profile 315 defined by the lobe(s) 210 of the element 118 moves into and/or away from the trough portion 240 of the lobe profile 315 formed between the lobe(s) 205 of the element 116 during the simultaneous counter-rotation in the opposite directions A, B respectively. Accordingly, the elements 116, 118 effect a continuous self-wiping action between each other as the the elements 116, 118 are counter-rotated simultaneously in the opposite directions A, B respectively.
Referring to FIGS. 7-9, exemplary side-view illustrations of single lobed, bi-lobed, and four-lobed elements 116, 118 of FIG. 1 are disclosed. Lobes 705, 805, 905 associated with the single lobed, bi-lobed, and four-lobed elements 116, 118 are defined by lobe profiles 710, 810, 910 respectively. The lobe profile(s) 710, 810, and 910 for each element, for example, the element 116, are provided by functionally continuous curves 715, 815, 915 obtained by combining a first curve 720, 820, 920 to a second curve 725, 825, 925 respectively. The first curves 720, 820, 920 are represented by a mathematical expression. The second curves 725, 825, 925 are a mirror-image of the first curves 720, 820, 920 respectively about a radial axis RA passing through a central axis C of the element 116 and one of two extreme points (730, 735), (830, 835), (930, 935) of the first curves 720, 820, 920 respectively. The mathematical expression for the first curves 720, 820, 920 are respectively defined by:

$$x = \left[ \frac{Di}{2} + \left( \frac{Do - Di}{2} \right) \left( \frac{\alpha - \sin \alpha}{2\pi} \right) \right] \cos \left( \frac{\alpha}{2N} \right)$$

$$y = \left[ \frac{Di}{2} + \left( \frac{Do - Di}{2} \right) \left( \frac{\alpha - \sin \alpha}{2\pi} \right) \right] \sin \left( \frac{\alpha}{2N} \right),$$

wherein,

x, y are Cartesian co-ordinates defined in a radial plane R of the element(s),

Do is an outer diameter of the element(s) or the lobe profile(s) 710, 810, 910 respectively,
Di is an inner diameter of the element(s) or the lobe profile(s) 710, 810, 910 respectively,
N is a number of the lobes 705, 805, 905 in the element(s), and
$\alpha$ is an angle of radial sections 740, 840, 940 defined by the first curves 720, 820, 920 in the radial plane R respectively.

**Specific Embodiments are Described Below**

An element for a counter-rotating twin screw processor, the element having an axial bore for mounting on a screw shaft of the processor, the element comprising at least one continuous self-wiping flight helically formed thereon, the element having one or more lobes with a lobe profile that is defined in a radial plane of the element and provided by a functionally continuous curve obtained by combining a first curve to a second curve, the first curve being represented by a mathematical expression and the second curve being a mirror-image of the first curve about a radial axis passing through a central axis of the element and one of two extreme points of the first curve, and the mathematical expression for the first curve being defined by

$$x = \left[\frac{Di}{2} + \left(\frac{Do - Di}{2}\right)\left(\frac{\alpha - \sin\alpha}{2\pi}\right)\right] \cos\left(\frac{\alpha}{2N}\right)$$

$$y = \left[\frac{Di}{2} + \left(\frac{Do - Di}{2}\right)\left(\frac{\alpha - \sin\alpha}{2\pi}\right)\right] \sin\left(\frac{\alpha}{2N}\right),$$

wherein,

x, y are Cartesian co-ordinates defined in the radial plane,
Do is an outer diameter of the element or the lobe profile,
Di is an inner diameter of the element or the lobe profile,
N is a number of the one or more lobes, and
$\alpha$ is an angle of a radial section defined by the first curve in the radial plane.

Such element(s), wherein the angle $\alpha$ of the radial section varies from 0 to $2\pi$.
Such element(s), wherein the radial section is defined by $\pi/N$.
Such element(s), wherein the one of the two extreme points of the first curve lies on the outer diameter (Do) of the element or the lobe profile.
Such element(s), wherein the one or more lobes are integer lobes and the flight is an integer lobe flight.
Such element(s), wherein the one or more lobes are non-integer lobes and the flight is a non-integer lobe flight.
Such element(s), wherein the one or more lobes are fractional lobes and the flight is a fractional lobe flight.
Such element(s), wherein the flight transforms one or more times along an axial length of the element, the flight transformation involving a change in the one or more lobes along the axial length.
Such element(s), wherein the flight transforms from an integer lobe flight to a non-integer lobe flight or vice versa, or from an integer lobe flight to another integer lobe flight or from a non-integer lobe flight to another non-integer lobe flight.
Such element(s), wherein the lobe profile of the one or more lobes transformed axially in a helical manner defines the at least one continuous self-wiping flight.
A counter-rotating screw for a counter-rotating twin-screw processor having an axial bore housing the counter-rotating screw, wherein at least one portion of the counter-rotating screw comprises one or more lobes with a lobe profile that is defined in a radial plane of the element and provided by a functionally continuous curve obtained by combining a first curve to a second curve, the first curve being represented by a mathematical expression and the second curve being a mirror-image of the first curve about a radial axis passing through a central axis of the element and one of two extreme points of the first curve, and the mathematical expression for the first curve being defined by

$$x = \left[\frac{Di}{2} + \left(\frac{Do - Di}{2}\right)\left(\frac{\alpha - \sin\alpha}{2\pi}\right)\right] \cos\left(\frac{\alpha}{2N}\right)$$

$$y = \left[\frac{Di}{2} + \left(\frac{Do - Di}{2}\right)\left(\frac{\alpha - \sin\alpha}{2\pi}\right)\right]\sin\left(\frac{\alpha}{2N}\right),$$

wherein,

> x, y are Cartesian co-ordinates defined in the radial plane,
> Do is an outer diameter of the counter-rotating screw or the lobe profile,
> Di is an inner diameter of the counter-rotating screw or the lobe profile,
> N is a number of the one or more lobes, and
> α is an angle of a radial section defined by the first curve in the radial plane.

Such counter-rotating screw(s), wherein the at least one portion of the counter-rotating screw defines at least one continuous self-wiping flight helically formed thereon.

A pair of elements for a twin-screw processor having a first shaft and a second shaft, comprising: a first element adapted to be coupled to the first shaft; and a second element adapted to be coupled to the second shaft; wherein the first element and the second element each have a continuous self-wiping flight helically formed thereon; and have one or more lobes with a lobe profile that is defined in a radial plane of the first element and the second element respectively and the lobe profile is provided by a functionally continuous curve obtained by combining a first curve to a second curve, the first curve being represented by a mathematical expression and the second curve being a mirror-image of the first curve about a radial axis passing through a central axis of the first element or the second element and one of two extreme points of the first curve, and the mathematical expression for the first curve being defined by

$$x = \left[\frac{Di}{2} + \left(\frac{Do - Di}{2}\right)\left(\frac{\alpha - \sin\alpha}{2\pi}\right)\right]\cos\left(\frac{\alpha}{2N}\right)$$

$$y = \left[\frac{Di}{2} + \left(\frac{Do - Di}{2}\right)\left(\frac{\alpha - \sin\alpha}{2\pi}\right)\right]\sin\left(\frac{\alpha}{2N}\right),$$

wherein,

> x, y are Cartesian co-ordinates defined in the radial plane,
> Do is an outer diameter of the first element, the second element, or the lobe profile,
> Di is an inner diameter of the first element, the second element, or the lobe profile,
> N is a number of the one or more lobes, and
> α is an angle of a radial section defined by the first curve in the radial plane

Industrial Applicability

The elements 116, 118 as taught by the present disclosure are self-wiping and suitable for use in counter-rotating twin screw processors. Consequently, the elements 116, 118 as taught may improve a mixing and/or melting capability of the processor 100 and may help in achieving a homogeneous melt mix. In addition, the elements 116, 118 as taught may also reduce material stagnation and improve an elongational flow of the materials during the melting and homogenizing process. Furthermore, the elements 116, 118 as taught may facilitate the melting and/or homogenizing of the materials at a process temperature lesser than generally involved in the melting and/or homogenizing process in the processor 100. In particular, the elements 116, 118 may be suitable for processing of temperature sensitive materials such as pharmaceutical ingredients including API. The elements 116, 118 may also suitable for processing mixed materials with different melting or softening points such as waste material for recycling.

**Claims**

1. An element for a counter-rotating twin screw processor, the element having an axial bore for mounting on a screw shaft of the processor, the element comprising at least one continuous self-wiping flight helically formed thereon, the element having one or more lobes with a lobe profile that is defined in a radial plane of the element and provided by a functionally continuous curve obtained by combining a first curve to a second curve, the first curve being represented by a mathematical expression and the second curve being a mirror-image of the first curve about a radial axis passing through a central axis of the element and one of two extreme points of the first curve, and the mathematical expression for the first curve being defined by

$$x = \left[\frac{Di}{2} + \left(\frac{Do - Di}{2}\right)\left(\frac{\alpha - \sin\alpha}{2\pi}\right)\right]\cos\left(\frac{\alpha}{2N}\right)$$

$$y = \left[\frac{Di}{2} + \left(\frac{Do - Di}{2}\right)\left(\frac{\alpha - \sin\alpha}{2\pi}\right)\right]\sin\left(\frac{\alpha}{2N}\right),$$

wherein,

x, y are Cartesian co-ordinates defined in the radial plane,
Do is an outer diameter of the element or the lobe profile,
Di is an inner diameter of the element or the lobe profile,
N is a number of the one or more lobes, and
$\alpha$ is an angle of a radial section defined by the first curve in the radial plane.

2. The element as claimed in claim 1, wherein the angle $\alpha$ of the radial section varies from 0 to $2\pi$.

3. The element as claimed in claim 1, wherein the radial section is defined by $\pi/N$.

4. The element as claimed in claim 1, wherein the one of the two extreme points of the first curve lies on the outer diameter (Do) of the element or the lobe profile.

5. The element as claimed in claim 1, wherein the one or more lobes are integer lobes and the flight is an integer lobe flight.

6. The element as claimed in claim 1, wherein the one or more lobes are non-integer lobes and the flight is a non-integer lobe flight.

7. The element as claimed in claim 1, wherein the one or more lobes are fractional lobes and the flight is a fractional lobe flight.

8. The element as claimed in claim 1, wherein the flight transforms one or more times along an axial length of the element, the flight transformation involving a change in the one or more lobes along the axial length.

9. The element as claimed in claim 8, wherein the flight transforms from an integer lobe flight to a non-integer lobe flight or vice versa, or from an integer lobe flight to another integer lobe flight or from a non-integer lobe flight to another non-integer lobe flight.

10. The element as claimed in claim 1, wherein the lobe profile of the one or more lobes transformed axially in a helical manner defines the at least one continuous self-wiping flight.

11. A counter-rotating screw for a counter-rotating twin-screw processor having an axial bore housing the counter-rotating screw, wherein at least one portion of the counter-rotating screw comprises one or more lobes with a lobe profile that is defined in a radial plane of the element and provided by a functionally continuous curve obtained by combining a first curve to a second curve, the first curve being represented by a mathematical expression and the second curve being a mirror-image of the first curve about a radial axis passing through a central axis of the element and one of two extreme points of the first curve, and the mathematical expression for the first curve being defined by

$$x = \left[\frac{Di}{2} + \left(\frac{Do - Di}{2}\right)\left(\frac{\alpha - \sin\alpha}{2\pi}\right)\right]\cos\left(\frac{\alpha}{2N}\right)$$

$$y = \left[\frac{Di}{2} + \left(\frac{Do - Di}{2}\right)\left(\frac{\alpha - \sin\alpha}{2\pi}\right)\right]\sin\left(\frac{\alpha}{2N}\right),$$

wherein,

x, y are Cartesian co-ordinates defined in the radial plane,
Do is an outer diameter of the counter-rotating screw or the lobe profile,
Di is an inner diameter of the counter-rotating screw or the lobe profile,
N is a number of the one or more lobes, and
α is an angle of a radial section defined by the first curve in the radial plane.

**12.** The counter-rotating screw as claimed in claim 11, wherein the at least one portion of the counter-rotating screw defines at least one continuous self-wiping flight helically formed thereon.

**13.** A counter-rotating twin-screw processor comprising:

a barrel defining a first cylindrical bore and a second cylindrical bore, wherein the first cylindrical bore and the second cylindrical bore intersect to form a chamber;
a first shaft that rotates within the first bore about an axis;
a second shaft that rotates within the second bore about an axis; and
at least one element coupled to the first shaft and the second shaft respectively, the at least one element having an axial bore for mounting on the first shaft and the second shaft, wherein the at least one element comprises a continuous self-wiping flight helically formed thereon, the at least one element having one or more lobes with a lobe profile that is defined in a radial plane of the at least one element and provided by a functionally continuous curve obtained by combining a first curve to a second curve, the first curve being represented by a mathematical expression and the second curve being a mirror-image of the first curve about a radial axis passing through a central axis of the at least one element and one of two extreme points of the first curve, and the mathematical expression for the first curve being defined by

$$x = \left[\frac{Di}{2} + \left(\frac{Do - Di}{2}\right)\left(\frac{\alpha - \sin\alpha}{2\pi}\right)\right]\cos\left(\frac{\alpha}{2N}\right)$$

$$y = \left[\frac{Di}{2} + \left(\frac{Do - Di}{2}\right)\left(\frac{\alpha - \sin\alpha}{2\pi}\right)\right]\sin\left(\frac{\alpha}{2N}\right),$$

wherein,

x, y are Cartesian co-ordinates defined in the radial plane,
Do is an outer diameter of the at least one element or the lobe profile,
Di is an inner diameter of the at least one element or the lobe profile,
N is a number of the one or more lobes, and
α is an angle of a radial section defined by the first curve in the radial plane.

**14.** The counter-rotating twin-screw processor as claimed in claim 13, wherein the lobe profile defines a crest portion and a trough portion such that a clearance is defined between the crest portion of the at least one element coupled to the first shaft and the trough portion of the at least one element coupled to the second shaft.

**15.** The counter-rotating twin-screw processor as claimed in claim 13, wherein the clearance ranges of 150 μm to 250 μm.

**16.** A pair of elements for a twin-screw processor having a first shaft and a second shaft, comprising: a first element adapted to be coupled to the first shaft; and a second element adapted to be coupled to the second shaft; wherein the first element and the second element each have a continuous self-wiping flight helically formed thereon; and have one or more lobes with a lobe profile that is defined in a radial plane of the first element and the second element respectively and the lobe profile is provided by a functionally continuous curve obtained by combining a first curve to a second curve, the first curve being represented by a mathematical expression and the second curve being a mirror-image of the first curve about a radial axis passing through a central axis of the first element or the second element and one of two extreme points of the first curve, and the mathematical expression for the first curve being defined by

$$x = \left[\frac{Di}{2} + \left(\frac{Do - Di}{2}\right)\left(\frac{\alpha - \sin \alpha}{2\pi}\right)\right] \cos\left(\frac{\alpha}{2N}\right)$$

$$y = \left[\frac{Di}{2} + \left(\frac{Do - Di}{2}\right)\left(\frac{\alpha - \sin \alpha}{2\pi}\right)\right] \sin\left(\frac{\alpha}{2N}\right),$$

wherein,

x, y are Cartesian co-ordinates defined in the radial plane,
Do is an outer diameter of the first element, the second element, or the lobe profile,
Di is an inner diameter of the first element, the second element, or the lobe profile,
N is a number of the one or more lobes, and
$\alpha$ is an angle of a radial section defined by the first curve in the radial plane.

*FIG. 1*

EP 4 470 747 A1

FIG. 2

EP 4 470 747 A1

*FIG. 3B*

*FIG. 3A*

FIG. 4

*FIG. 5*

FIG. 6A

FIG. 6B

FIG. 6C

FIG. 7

FIG. 8

FIG. 9

Europäisches
Patentamt

European
Patent Office

Office européen
des brevets

## EUROPEAN SEARCH REPORT

**Application Number**

EP 24 17 8548

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 6 260 995 B1 (SCHUCHARDT HEINRICH [DE]) 17 July 2001 (2001-07-17) * column 3, line 11 - column 4, line 66 * * examples 1-3 * * claims 1-10 * * figures 1-7 * | 1-16 | INV. B29C48/41 B29C48/505 B29C48/25 ADD. B29B7/48 |
| Y | RAUWENDAAL C ED - PIELICHOWSKA KINGA: "THE GEOMETRY OF SELF-CLEANING TWIN-SCREWS EXTRUDERS", ADVANCES IN POLYMER TECHNOLOGY, WILEY AND SONS, HOBOKEN, NJ, US, vol. 15, no. 2, 21 June 1996 (1996-06-21), pages 127-133, XP000586048, ISSN: 0730-6679 * figures 6-8 * | 1-16 | |
| Y | US 5 876 115 A (SCHEBESTA KLAUS [DE] ET AL) 2 March 1999 (1999-03-02) * figures 1-13 * | 1-16 | |
| A | US 6 296 461 B1 (STOSIC NIKOLA RUDI [GB]) 2 October 2001 (2001-10-02) * figures 1-4 * | 1-16 | TECHNICAL FIELDS SEARCHED (IPC) B29B B29C |
| A | US 5 399 012 A (SCHUCHARDT HEINRICH [DE] ET AL) 21 March 1995 (1995-03-21) * figures 1-12 * | 1-16 | |
| A | CHIRUVELLA R V ET AL: "TRANSPORT IN A TWIN-SCREW EXTRUDER FOR THE PROCESSING OF POLYMERS", POLYMER ENGINEERING AND SCIENCE, BROOKFIELD CENTER, US, vol. 36, no. 11, 15 June 1996 (1996-06-15), pages 1531-1540, XP000637019, ISSN: 0032-3888, DOI: 10.1002/PEN.10548 * second paragraph on page 1532 * | 1-16 | |

-/--

The present search report has been drawn up for all claims

| Place of search | Date of completion of the search | Examiner |
|---|---|---|
| Munich | 20 September 2024 | Ngwa, Walters |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 112 539 171 A (ZHEJIANG BROAD PUMP CO LTD) 23 March 2021 (2021-03-23) * figures 1-4 * ----- | 1-16 | |

**TECHNICAL FIELDS SEARCHED (IPC)**

The present search report has been drawn up for all claims

| Place of search | Date of completion of the search | Examiner |
|---|---|---|
| Munich | 20 September 2024 | Ngwa, Walters |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 17 8548

This annex lists the patent family members relating to the patent documents cited in the above-mentioned European search report.
The members are as contained in the European Patent Office EDP file on
The European Patent Office is in no way liable for these particulars which are merely given for the purpose of information.

20-09-2024

| Patent document cited in search report | | Publication date | Patent family member(s) | | Publication date |
|---|---|---|---|---|---|
| US 6260995 | B1 | 17-07-2001 | DE | 19801073 A1 | 15-07-1999 |
| | | | EP | 0930141 A1 | 21-07-1999 |
| | | | ES | 2168811 T3 | 16-06-2002 |
| | | | JP | 4202506 B2 | 24-12-2008 |
| | | | JP | H11253778 A | 21-09-1999 |
| | | | US | 6260995 B1 | 17-07-2001 |
| US 5876115 | A | 02-03-1999 | DE | 19611852 A1 | 02-10-1997 |
| | | | EP | 0798093 A2 | 01-10-1997 |
| | | | ES | 2164948 T3 | 01-03-2002 |
| | | | JP | 4030621 B2 | 09-01-2008 |
| | | | JP | H09254149 A | 30-09-1997 |
| | | | US | 5876115 A | 02-03-1999 |
| US 6296461 | B1 | 02-10-2001 | AU | 2903797 A | 05-12-1997 |
| | | | DE | 69710716 T2 | 21-11-2002 |
| | | | EP | 0898655 A1 | 03-03-1999 |
| | | | ES | 2173445 T3 | 16-10-2002 |
| | | | US | 6296461 B1 | 02-10-2001 |
| | | | WO | 9743550 A1 | 20-11-1997 |
| US 5399012 | A | 21-03-1995 | DE | 4126425 A1 | 11-02-1993 |
| | | | EP | 0528210 A1 | 24-02-1993 |
| | | | JP | 3427846 B2 | 22-07-2003 |
| | | | JP | H05245832 A | 24-09-1993 |
| | | | US | 5399012 A | 21-03-1995 |
| CN 112539171 | A | 23-03-2021 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6783270 B
- US 10207423 B
- US 10239233 B
- US 8753003 B